(19)

Europäisches
Patentamt
European
Patent Office
Office européen
des brevets

(11) **EP 2 125 940 B1**

(12) **EUROPEAN PATENT SPECIFICATION**

(45) Date of publication and mention
of the grant of the patent:
**01.08.2012 Bulletin 2012/31**

(21) Application number: **08701926.1**

(22) Date of filing: **25.01.2008**

(51) Int Cl.:
*C08J 7/18* (2006.01)      *C08J 5/22* (2006.01)
*H01M 8/10* (2006.01)

(86) International application number:
**PCT/GB2008/000253**

(87) International publication number:
**WO 2008/090351 (31.07.2008 Gazette 2008/31)**

(54) **ANION EXCHANGE MEMBRANES**

ANIONENAUSTAUSCHMEMBRANE

MEMBRANES ÉCHANGEUSES D'ANIONS

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **26.01.2007 GB 0701449**

(43) Date of publication of application:
**02.12.2009 Bulletin 2009/49**

(60) Divisional application:
**12000508.7 / 2 468 804**

(73) Proprietor: **THE SECRETARY OF STATE FOR
DEFENCE
Salisbury, Wiltshire SP4 0JQ (GB)**

(72) Inventors:
• **BROWNING, Darren, Jonathan
Wiltshire SP4 0JQ (GB)**

• **LOVELL, Keith, Victor
Wiltshire SN6 8LA (GB)**
• **HORSFALL, Jacqueline, Anne
Wiltshire SN6 8LA (GB)**
• **WARING, Susan, Christine
Wiltshire SN6 8LA (GB)**

(74) Representative: **Farnsworth, Alastair Graham et al
DIPR Formalities Section
Oak 2E Nr.6228
Abbey Wood (North)
Bristol BS34 8JH (GB)**

(56) References cited:
**WO-A-2006/131758      GB-A- 1 472 232
US-A1- 2005 049 319**

**Description**

The present invention relates to the production of anion exchange membranes and particularly to the production of anion exchange membranes suitable for use in alkaline fuel cells and more particularly in direct borohydride fuel cells.

Anion exchange membranes (AEMs) are known and are used in various separation and purification applications, for example in electrodialysis, salt-splitting and metathesis. They can be used either as a monopolar membrane or as a layer for a bipolar membrane; they can be prepared by a number of different techniques, usually by amination of halomethylated polymers with various diamines. EP 0563851 (Fraunhofer) describes a process for the preparation of a bipolar membrane comprising an anion-selective layer and a cation-selective layer; the layers being produced from polymer solutions. JP2003096219 (Asahi Glass) describes a process for the preparation of an AEM comprising a polymer having a crosslinking structure formed by reacting an aromatic polysulfonic polymer, having a specific haloalkyl group, with a polyamine and monoamine. One problem with many known AEMs is that their stability, especially in concentrated alkaline environments, is poor, due to the decomposition of the anion exchange groups in concentrated alkali solution.

Poor stability in alkaline environments is a drawback for any ion exchange membrane used in alkaline fuel cells. WO2006003182 (Solvay) describes AEMs suitable for use in solid alkaline fuel cells. The AEMs comprise diamines or polyamines coupled to a support polymer via a sulphonamide linkage. At least one nitrogen atom of the diamine or polyamine is a quaternised nitrogen atom acting as an anion exchange group.

GB 1 472 232 discloses methods for making ion exchange membranes which are based on radiation grafting monomer mixtures comprising hydroxy- or acyloxystyrenes <u>and</u> polyenes (including divinyl benzene) to hydrocarbon polymers (for example, polyethene) and subsequently introducing ion exchange groups in a two step sequence of reactions. The ion-exchange groups may be cation exchange groups such as sulfonic acid or anion exchange groups such as quaternary ammonium or phosphonium groups - but only cation exchange groups are exemplified. An organic solvent for the graft copolymerisation reaction may be used - for example (page 3, lines 54 to 58) a ketone, ester, alcohol, ether, aromatic hydrocarbons and aliphatic or alicyclic hydrocarbon and mixtures thereof.

However, there is a constant desire to improve the ionic conductivity of such membranes, whilst maintaining adequate chemical stability.

The direct borohydride fuel cell (DBFC) is a subcategory of the alkaline fuel cell in which the fuel is a solution of sodium borohydride. The primary advantage of sodium borohydride over the hydrogen in a conventional alkaline fuel cell is that sodium borohydride is easier to store than hydrogen, leading to improved system energy densities. Furthermore, the highly alkaline fuel and the waste $Na_2B_4O_7$ (borax) which is produced, prevent carbon dioxide poisoning of the fuel cell.

The DBFC also has advantages over the direct methanol fuel cell (DMFC) which suffers from low activity and large methanol crossover rate at the membrane. This results in reduced energy efficiency and cell performance. By contrast the DBFC produces no gaseous by-products and higher specific energy. The DBFC can operate using either a cation exchange membrane (CEM) or an AEM. Use of an AEM has the advantage that it does not require recirculation of sodium hydroxide from the cathode to the anode. However, the few commercially available AEMs have been developed for other applications and have not been optimised for use in alkaline fuel cells and, in particular the DBFC.

The present invention aims to provide an AEM having increased ionic conductivity, high chemical stability in alkaline environments and low permeability in order to minimise fuel crossover.

The present invention, therefore, provides a method for preparing an anion exchange membrane comprising the steps of: selecting a hydrocarbon polymer film; radiation grafting the hydrocarbon polymer film with a monomer and adding a quaternising agent to impart ionic conductivity, wherein:

the monomer is vinyl benzene chloride (VBC) and is presented in the form of a monomer/diluent mixture:

the diluent comprises alcohol and a hydrocarbon solvent;

the monomer/diluent mixture comprises at least 10% by volume of alcohol; and

the quaternising agent is selected from the group consisting of alkyl amines.

The anion exchange membrane is preferably washed in an appropriate solvent to remove any homopolymer and dried to constant weight. If this step is omitted unreacted monomer will wash off the polymer during use and will affect the ion conductivity of the membrane over time.

The alcohol used is preferably methanol. The hydrocarbon solvent is advantageously selected from the group consisting of aromatic or aliphatic hydrocarbons, with toluene, xylene or benzene being the preferred options.

In order to reduce cost the monomer content of the monomer/diluent mixture is minimised and is preferably less than 60% by volume and more preferably is in the range 30-50% by volume.

It has been found that using vinyl benzene chloride (VBC) as the monomer results in particularly improved membrane properties.

The hydrocarbon polymer film may be preformed or prepared from powder or granule. Whilst any hydrocarbon polymer film may be used both low density polyethylene (LDPE) and high density polyethylene (HDPE) are widely available and relatively cheap and are thus the preferred starting materials.

Radiation grafting has been known for many years and has proved a successful route to prepare different types of membranes. The radiation grafting method allows a hybrid material to be formed from two completely different materials. For example, low density polyethylene is a stable hydrocarbon film, which is hydrophobic and not ion-conducting. Acrylic acid is a hydrophilic, acidic monomer; in its polymeric form, it is mechanically weak and soluble in water. However, if a graft copolymer is formed from these two components, a mechanically strong, insoluble, hydrophilic, acidic ion exchange membrane is obtained.

There are two basic methods for radiation grafting, mutual grafting (MG) and post-irradiation grafting (PIG); the difference being at which step the irradiation is applied to the film. In MG the polymer and monomer are reacted together while being irradiated, whereas for PIG, the films are irradiated alone in an oxygen containing atmosphere to form fairly stable peroxy radicals and then reacted with the monomer in a separate reaction. MG is known to provide better membrane uniformity and conductivity, however, since the PIG irradiated polymer can be kept in its reactive state at low temperature for up to a year without losing its ability to graft, PIG may be more suitable for the preparation of larger quantities of membrane. The method chosen may also depend upon the monomer and polymer involved. Therefore, the present invention applies equally to both methods of radiation grafting.

In practice the grafted copolymers have been found to have poor ionic conductivity as prepared, because the moieties grafted onto the polymers (eg VBC & VPy) are not themselves ironically conducting. Therefore, a post treatment is required to impart ionic conductivity. This is called quaternisation. Depending upon the monomer involved, a number of agents can be used for this. The quaternising agent may be selected from the group consisting of amines and more preferably an alkyl amine. It has been found that the most preferred quaternising agents are trimethylamine (TMA) or triethylamine (TEA) .

The quaternising agent may be a crosslinker in order to improve the chemical stability of the membrane, eg. N,N,N',N'-tetramethylhexane-1,6-diamine, diethylamino-ethylamine, diethylaminopropylamine (ref. J. Varcoe et al, Chem. Comm., 2006, 13, 1428-1429).

The invention will now be described, by way of example, with reference to the accompanying drawings, in which:

Figure 1 illustrates the reaction scheme using vinyl benzyl chloride as the monomer.
Figure 2 illustrates a reaction scheme using 4-vinyl pyridine as the monomer.
Figure 3 illustrates the apparatus used for the mutual grafting step of the method according to one embodiment of the present invention.

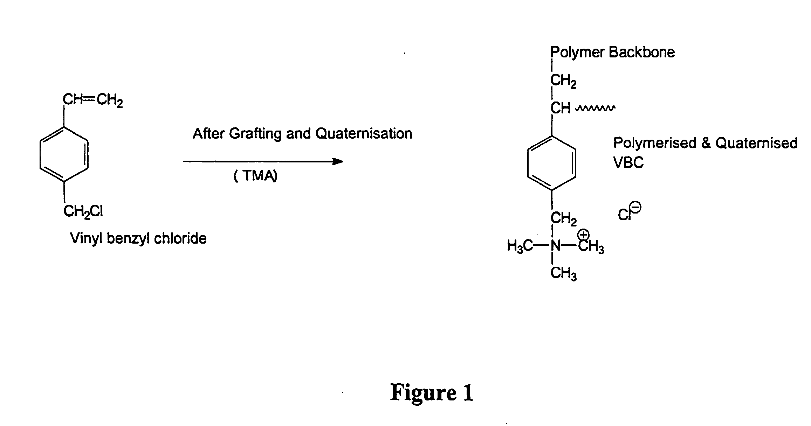

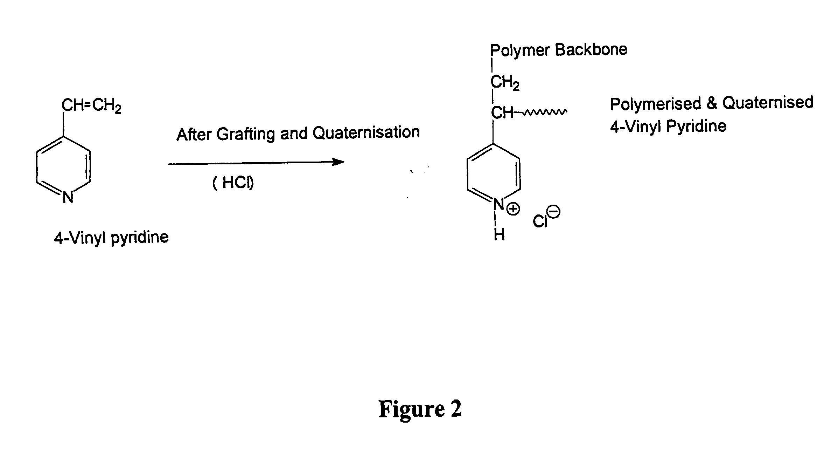

Figure 1 illustrates the reaction scheme of one embodiment of the invention in which VBC is grafted and quaternised using TMA. Figure 2 illustrates the reaction scheme of another invention in which VPy is grafted and quaternised using HCl.

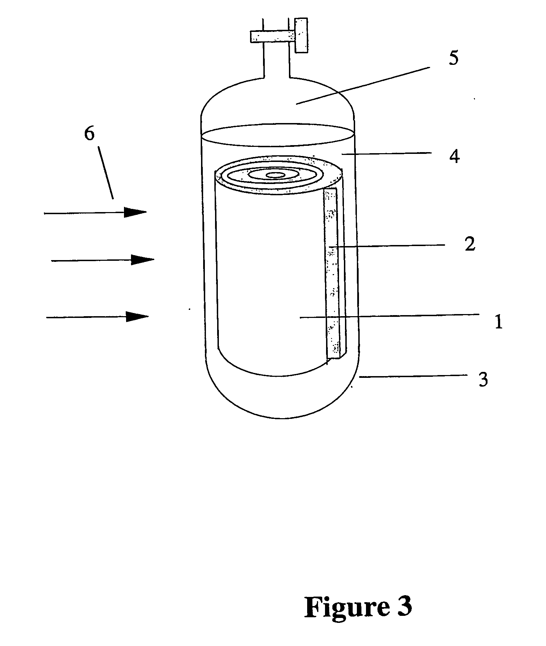

Referring to Figure 3 pieces of the chosen polymer film 1 are interleaved with a nonwoven, absorbent, interlayer material 2 and placed in a glass grafting vessel 3. The monomer/diluent mixture 4 is added until the roll is saturated. The oxygen in the vessel is then removed by either purging with nitrogen or by placing the vessel under vacuum in order to create an inert atmosphere 5 above the reactants. The vessel is then irradiated with ionising radiation 6. In the Examples described below the irradiation was carried out at $23\pm1$°C in a Cobalt 60 y source for a pre-determined time at a known dose rate. Once grafted, the films are washed in an appropriate solvent to remove any homopolymer, prior to drying to constant weight in an oven at 70°C.

The grafted film is then soaked in an aqueous solution of the chosen quaternising agent.

Experimental

All the polymers and reagents were used as received. Low density polyethylene (LDPE), nominal thickness $50\mu$m was supplied by BPI Films and high density polyethylene (HDPE), nominal thickness $40\mu$m was supplied by Metal Box Co. 4-Vinyl benzyl chloride (VBC) was supplied by Aldrich® stabilised with 0.05% tert-butylcatechol and 0.05% nitroparaffin. 4-Vinyl pyridine (VPy), 95% was supplied by Aldrich®, stabilised with 100ppm bydroquinone. Demineralised water, supplied from a mixed bed Elgastat ®, with conductivity <$50\mu$Scm$^{-1}$. Toluene and methanol were supplied by Fisher Scientific, UK, SLR grade. Hydrochloric acid 5M Analar volumetric solution was supplied by Merck®, Trimethylamine (TMA), 50% wt solution in water, Triethylamine (TEA), 99.5%, 2-chloroacetamide (2-CA) and Dimthylformamide (DMF) was supplied by Aldrich®.

The membranes synthesised were characterised using a number of laboratory tests. These included areal resistivity in the electrolyte, ion exchange capacity (IEC), equilibrium electrolyte uptake (EEU), and chemical stability.

The degree of grafting (DOG) of the membranes was calculated using the following formula:

$$\frac{W_g - W_0}{W_g} \times 100 = \text{Degree of Grafting (\%)}$$

*Where :*

$W_0$ = weight of polymer film before grafting

$W_g$ = weight of grafted copolymer

This means that the DOG is equivalent to the amount of monomer in the polymer. Therefore a copolymer that has a DOG= 50% consists of 50% grafted monomer plus -50% original polymer.

For fuel cell use, it is important that the membrane has the lowest resistivity possible in order to maximise the efficiency of the cell. In order to rank the membranes synthesised, their electrolytic resistivity was measured by placing the membrane in a thermostatically controlled cell at a temperature of $25 \pm 1°C$. An external torque clamp was used to ensure that the membranes were not over compressed during testing. The membrane samples were equilibrated in the electrolyte (6M NaOH) for a minimum of 16 hours prior to being measured. The resistivity measurements were taken using a Wayne Kerr Universal Bridge, Model B642 at a frequency of 1591.5 Hz, over a known test area. The resistivity value of the electrolyte pathway was measured using a polymer blank of comparable thickness to the membrane, with a hole cut in the test area. The "blank" measurement was then subtracted from the sample measurement. For each membrane, two samples were tested and the results averaged. The membrane resistivity was then calculated, taking into account the area of the sample.

The measurement of IEC is an indication of the ability of the ionic groups in the membrane to ionise and exchange different ions. It is therefore also a measure of the functionalisation of the membrane. A theoretical IEC can be calculated from the DOG for each of the moieties added which assumes that every grafted functional group will take place in the exchange reaction. Comparing the measured IEC with the theoretical value therefore gives a measure of the effectiveness of the quaternisation. However, the IEC measurement alone will not necessarily indicate how the membrane will perform in a fuel cell. If the membrane is not grafted throughout the thickness, it can still have a high IEC (if it has a large DOG), but it will also have a high resistivity measurement and would not be suitable for fuel cell use.

The IEC was measured as follows: approximately 0.5g of the membrane was equilibrated in 0.1M HCl solution for at least 24h at ambient temperature. The sample was then blotted dry and placed in 50ml of a known molarity sodium hydroxide solution (nominally 0.1M) and allowed to exchange for a further 24h at ambient temperature with occasional swirling. Aliquots of the exchanged NaOH solution were titrated to a phenolphthalein end-point against a known molarity HCl solution. The procedure was carried out in triplicate and the results averaged. The sample pieces in the exchange were then blotted dry and placed in a vacuum oven at $105 \pm 5°C$ and dried to constant weight.

In order to measure EEU the membranes were first weighed in their hydroxyl form after being dried at 40°C. They were then hydrated in 6M NaOH and left overnight at ambient temperature. The membranes were then removed from the NaOH, blotted to remove excess electrolyte from the surface and weighed. The EEU was calculated as:

$$EEU = \frac{W_1 - W_0}{W_0} \times 100$$

*Where :*

$W_0$ = Dry weight of membrane

$W_1$ = Weight of membrane wetted with electrolyte

In order to assess chemical stability the membranes were tested in both an oxidative and reductive environment as they would be subject to both of these in a fuel cell and an elevated temperature was used to provide the harshest test possible. The membranes in their dry, hydroxide form were weighed and their condition (colour, etc) noted. They were then treated in an aqueous solution of potassium hydroxide (68.8g) /potassium permanganate (3.2g) at 90°C for one hour (oxidative environment). The membranes were then rinsed in demineralised water and obvious physical changes noted. The same membrane was then immersed in an aqueous solution of sodium borohydride (30g)/sodium hydroxide (6M) at 70°C for 3 hours (reductive environment). The membranes were then washed in demineralised water, dried to constant weight and any physical change observed. The weight change was noted as a percentage. A large weight loss was taken as indicative of chemical instability and this was further checked by re-measurement of the areal resistivity and IEC.

Example 1

This example describes the mutual grafting reaction with vinyl benzyl chloride (VBC) as the monomer. The base polymer films for the membranes were a 50μm low density polyethylene (LDPE) and a 40μm high density poly-ethylene (HDPE). Other base polymers were also used, eg. ethylene tetrafluoroethylene (ETFE), though the membranes produced did not perform as well in characterization tests.

Experiments were carried out at varying dose rates (grafting time), while keeping the total dose constant, and differing total doses, (keeping the dose rate constant).

The optimum total radiation dose for the mutual membranes was found to be 1 Mrad at a low dose rate. A higher total dose resulted in an unwanted parasitic reaction (homopolymerisation) and gave a lower DOG. It was found that at the lower dose rates, the DOG increased.

Table 1 shows the effect of the diluent composition on the DOG achieved. It can be seen that the DOG is increased by the addition of methanol.

**Table 1. Effect of Monomer/Diluent Mixture Composition on Degree of Grafting**

| Membrane | %VBC | %Methanol | % Toluene | Degree of Grafting |
|---|---|---|---|---|
| LDPE-g-VBC | 40 | 0 | 60 | 16 |
| LDPE-g-VBC | 40 | 24 | 36 | 24 |
| LDPE-g-VBC | 40 | 30 | 30 | 26 |
| LDPE-g-VBC | 40 | 36 | 24 | 30 |
| HDPE-g-VBC | 40 | 24 | 36 | 26 |
| HDPE-g-VBC | 40 | 30 | 30 | 29 |
| HDPE-g-VBC | 40 | 36 | 24 | 31 |

A number of quaternising agents were used for the VBC copolymers, including TMA, DMF and TEA. Figure 1 illustrates the quaternisation of VBC copolymers with TMA. The membranes were soaked in an aqueous solution of the amine either with heating or at ambient temperature. The membranes were characterised as shown in Table 2.

**Table 2. Properties of VBC Grafted Copolymers**

| Membrane | DOG (%) | Quaternising Agent | Areal Resistivity in 6M NaOH | IEC (meq/g) | EEU% | Stability Test (% Loss) |
|---|---|---|---|---|---|---|
| LDPE-g-VBC | 9% | TMA | 1051 | - | - | - |
| LDPE-g-VBC | 17% | TMA | 0.27 | - | 27.17 | -6.11 |
| LDPE-g-VBC | 21% | TMA | 0.54 | - | - | - |
| | | TEA | 2.98 | - | - | -5.87 |
| LDPE-g-VBC | 24% | TMA | 0.32 | - | - | - |
| | | TEA | 1.36 | - | - | -8.60 |
| | | DMF | 2067 | - | 48 | 0 |
| LDPE-g-VBC | 26% | DMF | 989 | 0.763 | 16 | 0 |
| LDPE-g-VBC | 29% | DMF | 1165 | 0.665 | 41 | -0.06 |
| HDPE-g-VBC | 20% | TMA | 0.35 | - | 16.68 | -12.72 |
| HDPE-g-VBC | 22% | TMA | 0.34 | - | 27.51 | -5.18 |
| HDPE-g-VBC | 26% | TMA | 0.332 | - | - | - |
| | | DMF | 2306 | - | 28 | -0.04 |
| HDPE-g-VBC | 28% | TMA | 0.148 | 1.317 | - | - |
| | | DMF | 2034 | - | 36 | -0.04 |

Areal resistivity (in 6M NaOH) is a convenient and useful technique for assessing the potential performance of the membranes. It can be seen from Table 2 that VBC membranes with DOGs less than 17% and those quaternised with DMF have high resistivities likely to prevent their use in a fuel cell.

From Table 2, it can be seen that DMF does not perform well as a quaternising agent for the VBC graft copolymers. The membranes treated in this way have high areal resistivities and lower IECs than the theoretical value for that graft weight of VBC (29% $IEC_t$=1.709meq/g, measured=0.665meq/g). The best quaternising agent for the VBC copolymers is TMA which gives low resistivities and IECs comparable to the theoretical value. The best conditions were determined to be ambient temperature for 4 hours.

Two membranes, HDPE-g-VBC and LDPE-g-VBC both 22% DOG, quaternised with TMA, were placed in 6M NaOH solution and maintained at set temperatures between 25°C to 40°C for varying periods of time up to 60 days. The areal resistivities of the membranes were then re-measured and any change taken as an indicator of potential instability. The results are summarised in Table 3 and show that VBC grafted membranes are stable to at least 40°C and up to 60 days. The measured resistivities are considered to be within the experimental error associated with the measurement technique.

**Table 3. Stability of VBC copolymers in 6M NaOH at varying temperatures**

| Sample | Temperature °C | Areal resistivity in 6M NaOH ($\Omega\,cm^2$) | | |
|---|---|---|---|---|
| | | 0 days | 30 days | 60 days |
| HDPE-g-VBC | 25 | 0.37 | 0.25 | 0.38 |
| LDPE-g-VBC | 25 | 0.47 | 0.33 | 0.46 |
| HDPE-g-VBC | 40 | 0.39 | 0.32 | 0.47 |
| LDPE-g-VBC | 40 | 0.42 | 0.43 | 0.50 |

Example 2 (Reference example)

This example describes the mutual grafting reaction with vinyl pyridine (VPy) as the monomer. Again the polymer films used were a 50μm LDPE and a 40μm HDPE.

The quaternising reaction for the VPy grafted membranes was carried out using a thermal treatment with either 5M HCl or 2CA.

The DOGs obtained ranged from 10% and 60%. Although high grafts can be obtained using VPy as a monomer, once the DOG is above a certain level, the properties of the membrane are impaired; DOGs above 58% were too brittle to be of use as membranes.

The results are summarised in Table 4 and show that the VPy grafted membranes with a DOG> 29%, aminated with either 5M HCl or 2CA, have low areal resistivity.

**Table 4, Properties of VPy Grafted Copolymers**

| Membrane | DOG (%) | Quaternising Agent | Areal Resistivity in 6M NaOH | IEC (meq/g) | EEU% | Stability Test (% Loss) |
|---|---|---|---|---|---|---|
| LDPE-g-VPy | 29 | 2CA | 0.48 | - | 38 | -4.42 |
| LDPE-g-VPy | 35 | 2CA | 1.33 | - | - | - |
| LDPE-g-VPy | 46 | 2CA | 0.52 | - | 13.74 | -0.23 |
| | | 5MHCl | 1.19 | - | 100 | -1.09 |
| LDPE-g-VPy | 48 | 2CA | 0.52 | - | - | - |
| | | 5MHCl | 1.20 | 5.04 | 10.5 | 0 |
| LDPE-g-VPy | 57 | 2CA | 0.43 | - | 22.88 | -48.12 |
| | | 5MHCl | 1.75 | - | - | - |
| HDPE-g-VPy | 22 | 5MHCl | 6849 | - | 36.36 | - |
| HDPE-g-VPy | 38 | 2CA | 0.59 | - | 29.76 | -5.43 |
| HDPE-g-VPy | 59 | 2CA | 0.30 | - | 17.49 | -44.20 |

This invention was made with US Government support under Grant N00014-02-1-0225 awarded by the US Office of Naval Research. The US Government has certain rights in the invention.

**Claims**

1.  A method for preparing an anion exchange membrane comprising the steps of: selecting a hydrocarbon polymer film; radiation grafting the hydrocarbon polymer film with a monomer and adding a quaternising agent to impart ionic conductivity, wherein:

    the monomer is vinyl benzene chloride and is presented in the form of a monomer/diluent mixture
    the diluent comprises alcohol and a hydrocarbon solvent;
    the monomer/diluent mixture comprises at least 10% by volume of alcohol; and
    the quaternising agent is selected from the group consisting of alkyl amines.

2.  A method according to Claim 1, further comprising washing the anion exchange membrane in an appropriate solvent to remove any homopolymer and drying to constant weight.

3.  A method according to any preceding Claim in which the alcohol comprises methanol.

4.  A method according to according to any preceding Claim in which the hydrocarbon solvent is selected from the group consisting of aromatic hydrocarbons and aliphatic hydrocarbons.

5.  A method according to Claim 4 in which the hydrocarbon solvent is selected from the group consisting of toluene, xylene and benzene.

6.  A method according to any preceding Claim in which the monomer content of the monomer/diluent mixture is less than 60% by volume.

7.  A method according to Claim 6 in which the monomer content of the monomer /diluent mixture is 30-50% by volume.

8.  A method according to any preceding Claim in which the hydrocarbon polymer film is selected from the group consisting of low density polyethylene (LDPE) and high density polyethylene (HDPE).

9.  A method according to any preceding Claim in which the radiation grafting step is mutual grafting.

10. A method according to any one of Claims 1 to 9 in which the radiation grafting step is post-irradiation grafting.

11. A method according to Claim 1 in which the quaternising agent is selected from the group consisting of trimethylamine (TMA) and triethylamine (TEA).

12. A method according to any preceding Claim in which the quaternising agent is a crosslinker.

13. An anion exchange membrane prepared in accordance with the method of any preceding claim.

14. An alkaline fuel cell incorporating an anion exchange membrane according to Claim 13.

**Patentansprüche**

1.  Verfahren zur Herstellung einer Anionenaustauschermembran, das die folgenden Schritte aufweist:
    Auswählen eines Kohlenwasserstoffpolymerfilms; Strahlungspfropfen des Kohlenwasserstoffpolymerfilms mit einem Monomer und Hinzufügen eines Quaternisierungsmittels zur Vermittlung von Ionenleitfähigkeit, worin:

    das Monomer das vinylbenzylchlorid ist und in der Form eines Monomer/Verdünnungsmittel-Gemisches vorliegt;
    das Verdünnungsmittel Alkohol und ein Kohlenwasserstofflösungsmittel umfasst;
    das Monomer/Verdünnungsmittel-Gemisch zumindest 10 Vol.% Alkohol enthält; und
    das Quaternisierungsmittel unter den Alkylaminen ausgewählt ist.

**2.** Verfahren nach Anspruch 1, das ferner umfasst, die Anionenaustauschermembran in einem Lösungsmittel zu waschen, das geeignet ist, jegliches Homopolymer zu entfernen, und auf Gewichtskonstanz zu trocknen.

**3.** Verfahren nach einem der vorhergehenden Ansprüche, worin der Alkohol Methanol umfasst.

**4.** Verfahren nach einem der vorhergehenden Ansprüche, worin das Kohlenwasserstofflösungsmittel unter den aromatischen Kohlenwasserstoffen und den aliphatischen Kohlenwasserstoffen ausgewählt ist.

**5.** Verfahren nach Anspruch 4, worin das Kohlenwasserstofflösungsmittel unter Toluol, Xylol und Benzol ausgewählt ist.

**6.** Verfahren nach einem der vorhergehenden Ansprüche, worin der Monomergehalt in dem Monomer/Verdünnungsmittel-Gemisch kleiner als 60 Vol.% ist.

**7.** Verfahren nach Anspruch 6, worin der Monomergehalt in dem Monomer/Verdünnungsmittel-Gemisch 30 bis 50 Vol.-% beträgt.

**8.** Verfahren nach einem der vorhergehenden Ansprüche, worin der Kohlenwasserstoffpolymerfilm unter Polyethylen niedriger Dichte (LDPE) und Polyethylen hoher Dichte (HDPE) ausgewählt ist.

**9.** Verfahren nach einem der vorhergehenden Ansprüche, worin es sich bei dem Schritt des Strahlungspfropfens um gemeinsame Pfropfung handelt.

**10.** Verfahren nach einem der Ansprüche 1 bis 9, worin es sich bei dem Schritt des Strahlungspfropfens um Pfropfung nach der Bestrahlung handelt.

**11.** Verfahren nach Anspruch 1, worin das Quaternisierungsmittel unter Trimethylamin (TMA) und Triethylamin (TEA) ausgewählt ist.

**12.** Verfahren nach einem der vorhergehenden Ansprüche, worin das Quaternisierungsmittel ein Vernetzungsmittel ist.

**13.** Anionenaustauschermembran, die nach einem der vorhergehenden Ansprüche hergestellt ist.

**14.** Alkalische Brennstoffzelle, die eine Anionenaustauschermembran nach Anspruch 13 aufweist.

**Revendications**

**1.** Procédé de préparation d'une membrane échangeuse d'anions comprenant les étapes qui consistent : à sélectionner un film polymère hydrocarboné ; à greffer par irradiation le film polymère hydrocarboné avec un monomère et à ajouter un agent de quaternisation pour conférer une conductivité ionique, dans lequel :

le monomère est un chlorure de vinylbenzène et se présente sous forme d'un mélange monomère/diluant
le diluant comprend de l'alcool et un solvant hydrocarboné ;
le mélange monomère/diluant comprend au moins 10% en volume d'alcool ; et
l'agent de quaternisation est choisi dans le groupe constitué d'alkylamines.

**2.** Procédé selon la revendication 1, comprenant en outre le lavage de la membrane échangeuse d'anions dans un solvant approprié pour éliminer tout homopolymère et sécher jusqu'à poids constant.

**3.** Procédé selon l'une des revendications précédentes dans lequel l'alcool comprend du méthanol.

**4.** Procédé selon l'une des revendications précédentes dans lequel le solvant hydrocarboné est choisi dans le groupe constitué des hydrocarbures aromatiques et des hydrocarbures aliphatiques.

**5.** Procédé selon la revendication 4 dans lequel le solvant hydrocarboné est choisi dans le groupe constitué de toluène, de xylène et de benzène.

**6.** Procédé selon l'une des revendications précédentes dans lequel la teneur en monomère du mélange monomère/diluant est inférieure à 60% en volume.

7. procédé selon la revendication 6, dans lequel la teneur en monomère du mélange monomère/diluant est de 30 à 50% en volume.

8. Procédé selon l'une des revendications précédentes, dans lequel le film de polymère hydrocarboné est choisi dans le groupe constitué d'un polyéthylène basse densité (LDPE) et d'un polyéthylène haute densité (HDPE).

9. Procédé selon l'une des revendications précédentes, dans lequel l'étape de greffage par irradiation consiste en un greffage mutuel.

10. Procédé selon l'une quelconque des revendications 1 à 9 dans lequel l'étape de greffage par irradiation est un greffage post-irradiation.

11. Procédé selon la revendication 1 dans lequel l'agent de quaternisation est choisi dans le groupe constitué de triméthylamine (TMA) et de triéthylamine (TEA).

12. Procédé selon l'une des revendications précédentes dans lequel l'agent de quaternisation est un agent de réticulation.

13. Membrane échangeuse d'anions préparée conformément au procédé selon l'une des revendications précédentes.

14. Pile à combustible alcaline comprenant une membrane échangeuse d'anions selon la revendication 13.

CH=CH₂

CH₂Cl

Vinyl benzyl chloride

After Grafting and Quaternisation

( TMA)

Polymer Backbone

CH₂

CH ᶺᶺᶺᶺᶺᶺ

Polymerised & Quaternised
VBC

CH₂

H₃C—N⁺—CH₃

CH₃

Cl⁻

**Figure 1**

CH=CH₂

4-Vinyl pyridine

After Grafting and Quaternisation

( HCl)

Polymer Backbone

CH₂

CH

Polymerised & Quaternised
4-Vinyl Pyridine

N⁺ Cl⁻

H

**Figure 2**

EP 2 125 940 B1

**Figure 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0563851 A, Fraunhofer
- JP 2003096219 B, Asahi Glass
- WO 2006003182 A, Solvay
- GB 1472232 A

**Non-patent literature cited in the description**

- **J. VARCOE et al.** *Chem. Comm.,* 2006, vol. 13, 1428-1429